(19) **Europäisches Patentamt**
**European Patent Office**
**Office européen des brevets**

(11) **EP 4 392 739 B1**

(12) **FASCICULE DE BREVET EUROPEEN**

(45) Date de publication et mention de la délivrance du brevet:
**02.04.2025 Bulletin 2025/14**

(21) Numéro de dépôt: **23721712.0**

(22) Date de dépôt: **24.04.2023**

(51) Classification Internationale des Brevets (IPC):
**G01C 11/02** *(2006.01)* **B64G 1/10** *(2006.01)*
**G06T 5/00** *(2024.01)* **H04N 25/40** *(2023.01)*

(52) Classification Coopérative des Brevets (CPC):
**G01C 11/025; B64G 1/1021; H04N 25/41; H04N 25/768**

(86) Numéro de dépôt international:
**PCT/EP2023/060668**

(87) Numéro de publication internationale:
**WO 2023/213598 (09.11.2023 Gazette 2023/45)**

(54) **PROCÉDÉ DE GÉNÉRATION D'IMAGE PAR UN SATELLITE PAR FUSION À BORD D'IMAGES ACQUISES PAR LEDIT SATELLITE**

VERFAHREN ZUR ERZEUGUNG EINES BILDES MITTELS EINES SATELLITEN DURCH BORDFUSION VON MIT DEM SATELLITEN AUFGENOMMENEN BILDERN

METHOD FOR GENERATING AN IMAGE USING A SATELLITE BY THE ON-BOARD FUSION OF IMAGES CAPTURED BY SAID SATELLITE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **03.05.2022 FR 2204197**

(43) Date de publication de la demande:
**03.07.2024 Bulletin 2024/27**

(73) Titulaire: **Airbus Defence and Space SAS**
**31402 Toulouse Cedex 4 (FR)**

(72) Inventeurs:
• **GHEZAL, Mehdi**
**31402 TOULOUSE CEDEX 4 (FR)**
• **MARTINEZ, Amélie**
**31402 TOULOUSE CEDEX 4 (FR)**
• **MAMDY, Bruno**
**31402 TOULOUSE CEDEX 4 (FR)**

(74) Mandataire: **Plasseraud IP**
**104 Rue de Richelieu**
**CS92104**
**75080 Paris Cedex 02 (FR)**

(56) Documents cités:
**EP-A1- 3 217 649     FR-A1- 2 976 754**

## Description

### Domaine technique

La présente invention appartient au domaine de l'imagerie par des satellites en orbite terrestre, et concerne plus particulièrement un procédé de génération d'une image d'une zone géographique par un satellite, ainsi qu'un satellite pour la mise en œuvre d'un tel procédé de génération.

### Etat de la technique

Les missions d'observation de la Terre effectuées par un satellite en orbite terrestre consistent à acquérir des images de parties de la surface de la Terre, c'est-à-dire effectuer des prises de vues de celle-ci.

De manière conventionnelle, un tel satellite suit par exemple une orbite défilante (c'est-à-dire non-géostationnaire) autour de la Terre afin de réaliser des acquisitions lors de son survol de la surface de la Terre. A cet effet, il comporte un instrument d'observation associé à une résolution spatiale prédéterminée. La résolution spatiale correspond à la taille, par exemple en mètres, du plus petit objet qui peut être détecté dans une scène représentée par une image issue d'une acquisition effectuée par l'instrument d'observation.

Plusieurs méthodes d'acquisition peuvent être employées. Parmi ces dernières, celles de type balayage sont souvent employées. Selon un exemple plus spécifique, un « balayage par bandes » (« pushbroom » dans la littérature anglo-saxonne) est notamment mis en œuvre. Généralement, dans un tel cas, l'instrument d'observation comporte au moins un capteur linéaire (ou barrette) agencé transversalement à une direction de défilement du satellite au sol, et le défilement du satellite permet d'acquérir des images lignes successives qui représentent des portions adjacentes de la surface terrestre.

Toutefois, le défilement du satellite a un impact sur la capacité de l'instrument d'observation à effectuer des acquisitions nettes et précises. En particulier, lorsque l'on souhaite réaliser des acquisitions à haute résolution spatiale (par exemple inférieure à 1 mètre ou à 0.5 mètre), le temps de survol de la portion représentée par une image ligne acquise par le capteur linéaire devient trop faible de sorte que le temps d'intégration ne permet pas d'atteindre un rapport signal sur bruit (encore dit « SNR », acronyme de l'expression anglo-saxonne « signal to noise ratio ») satisfaisant.

On peut utiliser alors un capteur linéaire dit à report temporel et intégration ou TDI (acronyme de l'expression anglo-saxonne « Time Delay and Integration », voir par exemple les demandes de brevets EP 3217649 et FR 2976754). Typiquement, un tel capteur TDI comporte plusieurs étages de lignes de cellules d'acquisition qui effectuent un transfert de charges d'un ligne de cellules d'acquisition à une autre de manière synchronisée avec le défilement du satellite, chaque ligne de cellules d'acquisition ajoutant aux charges reçues de l'étage précédent la charge mesurée pour la portion observée. Un tel capteur TDI permet donc d'obtenir une image ligne bénéficiant d'un temps d'intégration plus important, proportionnel au nombre d'étages dudit capteur TDI. Toutefois, des erreurs de synchronisation entre le transfert de charges et le défilement du satellite (du fait d'erreurs sur la connaissance du défilement du satellite, de vibrations, etc.) entrainent une perte de contraste, c'est-à-dire une dégradation de la fonction de transfert de modulation (FTM).

D'autres méthodes d'acquisition permettent de réaliser l'acquisition de plusieurs images d'une même zone géographique au cours d'un même survol de ladite zone géographique par le satellite. C'est le cas par exemple des techniques dites « pushframe » (voir par exemple le brevet US 8487996), ou encore des techniques dites à ralenti infini dans lesquelles l'empreinte au sol d'un champ de vision de l'instrument d'observation est immobilisée lors de l'acquisition, par des manœuvres d'attitude du satellite permettant de compenser le défilement du satellite (voir par exemple le brevet FR 3107953), qui s'appuient sur des capteurs matriciels plutôt que sur des capteurs linéaires. Dès lors une possibilité pour améliorer le SNR et/ou le contraste pourrait consister à réaliser un post-traitement au sol des images représentant une même zone géographique. Toutefois, de telles acquisitions génèrent en pratique un volume de données très important qui s'avère difficile à rapatrier au sol compte tenu des débits actuels sur les liaisons descendantes des satellites en orbite terrestre.

### Exposé de l'invention

La présente invention a pour objectif de remédier à tout ou partie des inconvénients de l'art antérieur, notamment ceux exposés ci-avant, en proposant une solution qui permette d'améliorer à bord d'un satellite la qualité (en termes de SNR et/ou de FTM) des images acquises par un instrument d'observation de ce satellite.

A cet effet, et selon un premier aspect, il est proposé un procédé de génération d'une image par un satellite en orbite terrestre, ledit satellite embarquant un instrument d'observation et un circuit de traitement, ladite image représentant une zone géographique et étant obtenue en regroupant des images partielles représentant des zones partielles différentes à l'intérieur de la zone géographique, dans lequel les zones partielles sont traitées successivement et ledit procédé comporte, pour le traitement de chaque zone partielle :

- une réception, par le circuit de traitement, d'au moins deux images partielles élémentaires acquises par l'instrument d'observation à des instants respectifs différents et représentant ladite zone partielle en cours de traitement,
- une estimation, par le circuit de traitement, de décalages entre des pixels desdites au moins deux images partielles élémentaires,
- une fusion, par le circuit de traitement, desdites au moins deux images partielles élémentaires en fonction des décalages estimés, de sorte à former l'image partielle de ladite zone partielle en cours de traitement.

Les décalages sont estimés au moyen d'un filtre de Kalman réalisant une phase de prédiction et une phase de mise à jour, dans lequel les décalages pour la zone partielle en cours de traitement sont estimés en fonction de décalages prédits pour ladite zone partielle en cours de traitement à partir des décalages mis à jour pour la zone partielle traitée à l'itération précédente du filtre de Kalman, lesdits décalages prédits pour ladite zone partielle en cours de traitement étant mis à jour par comparaison des au moins deux images partielles élémentaires représentant la zone partielle en cours de traitement.

Ainsi, le procédé de génération d'image proposé repose sur l'acquisition de plusieurs images représentant une même zone géographique. Toutefois, ces images sont avantageusement fusionnées, pour obtenir une image de meilleure qualité, à bord du satellite de sorte qu'il n'est pas nécessaire de transmettre à une station sol, pour post-traitement, toutes les images acquises représentant la même zone géographique.

Toutefois, les capacités d'un satellite en termes de puissance de calcul et de mémoire disponibles sont généralement limitées. Afin de permettre une telle fusion à bord du satellite, le traitement permettant d'aboutir à l'image finale de meilleure qualité est décomposé en plusieurs morceaux, en fusionnant successivement des images partielles élémentaires représentant des zones partielles dont la réunion permet d'obtenir une image représentant la zone géographique considérée. Les dimensions (en nombre de pixels) des images partielles élémentaires sont donc fortement réduites par rapport aux dimensions de l'image à générer, de sorte que la quantité de données à traiter simultanément lors de la fusion d'images partielles élémentaires représentant une même zone partielle est limitée, les différentes zones partielles étant traitées successivement, l'une après l'autre.

Pour chaque zone partielle, l'instrument d'observation fournit au moins deux images partielles élémentaires, représentant la même zone partielle, acquises à des instants différents lors d'un même survol de ladite zone partielle par le satellite, pour des positions respectives différentes dudit satellite sur son orbite. De manière connue, des décalages peuvent être présents entre les pixels des deux images partielles élémentaires. En effet, du fait de différentes sources d'erreurs (méconnaissance de la ligne de visée de l'instrument d'observation, déformation géométrique d'une empreinte au sol d'un champ de vision de l'instrument d'observation du fait que la zone partielle est observée depuis deux positions différentes du satellite par rapport à ladite zone partielle, distorsion géométrique introduite par une optique de l'instrument d'observation, etc.), des pixels d'images partielles élémentaires différentes, qui devraient représenter une même portion de la zone partielle, peuvent en pratique représenter des portions respectives légèrement différentes de ladite zone partielle. L'écart entre ces portions respectives différentes se traduit par un décalage entre les pixels correspondants (en quantité pixels). Pour pouvoir fusionner correctement les images partielles élémentaires, ces décalages doivent être préalablement estimés et compensés pour fusionner des pixels représentant la même portion de la zone partielle. Toutefois, étant donné que les dimensions des images partielles élémentaires sont réduites (par rapport à celles de l'image finale à générer), le nombre de décalages à estimer et à compenser est également réduit. Ce nombre de décalages à estimer peut être davantage réduit, de manière optionnelle, en considérant des décalages entre groupes de pixels (« binning » dans la littérature anglo-saxonne).

Etant donné que les deux images partielles élémentaires sont censées représenter la même zone partielle, la comparaison du contenu desdites images partielles élémentaires permet d'estimer les décalages entre ces pixels. Les images partielles élémentaires étant de dimensions réduites, elles peuvent être utilisées pour estimer les décalages entre leurs pixels avec une complexité de calcul limitée. En outre, il peut généralement être supposé qu'il existe une corrélation non nulle entre d'une part les décalages entre pixels d'images partielles élémentaires représentant une zone partielle et, d'autre part, les décalages entre pixels d'images partielles élémentaires représentant une zone partielle différente, par exemple adjacente de la précédente. Par conséquent, les décalages entre pixels estimés pour une zone partielle peuvent être utilisés pour estimer les décalages entre pixels pour la zone partielle suivante.

Le principe de fonctionnement d'un filtre de Kalman, en ce qu'il repose sur une estimation itérative d'un vecteur d'état, selon laquelle le vecteur d'état pour l'itération en cours est d'abord prédit à partir du vecteur d'état mis à jour pour l'itération précédente, puis mis à jour pour tenir compte de mesures représentatives dudit vecteur d'état pour l'itération en cours, est donc particulièrement adapté à l'estimation des décalages entre pixels pour la fusion des images partielles élémentaires. En effet, en considérant que les itérations successives correspondent au traitement successif des différentes zones partielles et que le vecteur d'état correspond aux décalages entre pixels, alors la corrélation entre décalages de zones partielles successives permet d'effectuer une prédiction des décalages pour une zone partielle en cours de traitement à partir des décalages mis à jour pour la zone partielle traitée à l'itération précédente. En outre, la comparaison des images partielles élémentaires de la zone partielle en cours de traitement permet d'observer les décalages entre pixels pour la zone partielle en cours de traitement, et permet donc de mettre à jour les décalages prédits pour ladite zone partielle en cours de traitement.

Les images partielles élémentaires peuvent alors être fusionnées à bord du satellite en fonction des décalages estimés pour la zone partielle en cours de traitement (soit les décalages prédits soit les décalages mis à jour).

Dans des modes particuliers de mise en œuvre, le procédé de génération peut comporter en outre, de manière optionnelle, l'une ou plusieurs des caractéristiques suivantes, prises isolément ou selon toutes les combinaisons techniquement possibles.

Dans des modes particuliers de mise en œuvre, la comparaison desdites au moins deux images partielles élémentaires comporte un recalage entre elles desdites au moins deux images partielles élémentaires en fonction des décalages prédits pour la zone partielle en cours de traitement. Un tel recalage vise à compenser les décalages entre images partielles élémentaires pour obtenir des images partielles élémentaires recalées dont les pixels représentent sensiblement les mêmes portions de la zone partielle. Le recalage comporte par exemple un rééchantillonnage d'au moins une desdites images partielles élémentaires en fonction des décalages prédits.

Dans des modes particuliers de mise en œuvre, la mise à jour par le filtre de Kalman des décalages prédits met en œuvre un algorithme de calcul de flot optique appliqué auxdites au moins deux images partielles élémentaires recalées en fonction des décalages prédits.

Dans des modes particuliers de mise en œuvre, le filtre de Kalman estime des décalages entre groupes de pixels. De telles dispositions permettent de réduire les besoins en termes de capacité de calcul et de mémoire.

Dans des modes particuliers de mise en œuvre, les décalages estimés consistent en un vecteur de décalages entre lignes et un vecteur de décalages entre colonnes. De telles dispositions permettent de réduire les besoins en termes de capacité de calcul et de mémoire.

Dans des modes particuliers de mise en œuvre, la mise à jour par le filtre de Kalman des décalages prédits met en œuvre des gains de Kalman constants pour le traitement de toutes les zones partielles. De telles dispositions permettent de réduire les besoins en termes de capacité de calcul et de mémoire.

Dans des modes particuliers de mise en œuvre, la mise à jour par le filtre de Kalman des décalages prédits met en œuvre des gains variables.

Dans des modes particuliers de mise en œuvre, le filtre de Kalman est dépourvu d'entrée de commande.

Dans des modes particuliers de mise en œuvre, le filtre de Kalman comporte une entrée de commande pour la prise en compte d'informations externes dont dépendent les décalages à estimer. De telles dispositions sont avantageuses, notamment, lorsque l'écart temporel entre les instants d'acquisition respectifs des au moins deux images partielles élémentaires est relativement important. Dans un tel cas, certaines sources de décalages (par exemple les effets de projection) produisent des effets au moins en partie déterministes qui peuvent être estimés a priori et injectés dans le filtre de Kalman via l'entrée de commande. Il est également possible d'injecter dans le filtre de Kalman, via l'entrée de commande, des informations externes représentatives du bougé du satellite entre ces instants d'acquisition, par exemple obtenues via des mesures exogènes effectuées par des gyromètres du satellite.

Dans des modes particuliers de mise en œuvre, la fusion des au moins deux images partielles élémentaires d'une zone partielle comporte un recalage desdites au moins deux images partielles élémentaires en fonction des décalages estimés, et une combinaison desdites au moins deux images partielles élémentaires recalées.

Dans des modes particuliers de mise en œuvre, le recalage desdites au moins deux images partielles élémentaires comporte un rééchantillonnage d'au moins une desdites images partielles élémentaires en fonction des décalages estimés.

Dans des modes particuliers de mise en œuvre, les décalages estimés utilisés pour recaler et combiner lesdites au moins deux images partielles élémentaires, lors de la fusion, correspondent aux décalages prédits pour la zone partielle en cours de traitement. De telles dispositions permettent de réduire la quantité de recalages à effectuer pour la zone partielle en cours de traitement, et donc permettent de réduire les besoins en termes de capacité de calcul et de mémoire.

Dans des modes particuliers de mise en œuvre, la combinaison des au moins deux images partielles élémentaires recalées correspond à une somme pixel à pixel desdites au moins deux images partielles élémentaires recalées et/ou à une différence pixel à pixel entre lesdites au moins deux images partielles élémentaires recalées.

Dans des modes particuliers de mise en œuvre, le procédé de génération comporte une compression / décompression des images partielles élémentaires après leur acquisition par l'instrument d'observation et avant leur traitement par le circuit de traitement. De telles dispositions permettent de réduire les besoins en termes de débit de transfert de données et de mémoire à bord du satellite.

Selon un deuxième aspect, il est proposé un produit programme d'ordinateur comportant des instructions qui, lorsqu'elles sont exécutées par un circuit de traitement d'un satellite comportant en outre un instrument d'observation, configurent ledit circuit de traitement pour mettre en œuvre un procédé de génération d'image selon l'un quelconque des modes de mise en œuvre de la présente invention.

Selon un troisième aspect, il est proposé un satellite destiné à être placé en orbite terrestre, comportant un instrument d'observation et un circuit de traitement, ledit circuit de traitement étant configuré pour mettre en œuvre un procédé de génération d'image selon l'un quelconque des modes de mise en œuvre de la présente invention.

Dans des modes particuliers de réalisation, le satellite peut comporter en outre, de manière optionnelle, l'une ou plusieurs des caractéristiques suivantes, prises isolément ou selon toutes les combinaisons techniquement possibles.

Dans des modes particuliers de réalisation, l'instrument d'observation comporte au moins deux capteurs linéaires, chacun des au moins deux capteurs linéaires étant agencé transversalement à une direction de défilement dudit satellite et étant adapté à produire une ligne de pixels, chaque image partielle élémentaire étant une image ligne correspondant à une ou plusieurs lignes de pixels acquises successivement par l'un des au moins deux capteurs linéaires.

Dans des modes particuliers de réalisation, chacun des au moins deux capteurs linéaires est un capteur à report temporel et intégration.

Dans des modes particuliers de réalisation, l'instrument d'observation comporte au moins un capteur matriciel comportant une pluralité de cellules d'acquisition agencées selon une pluralité de lignes et une pluralité de colonnes, lesdites lignes de cellules d'acquisition s'étendant transversalement à une direction de défilement dudit satellite, chaque cellule d'acquisition étant adaptée à produire un pixel de sorte que ledit au moins un capteur matriciel est adapté à produire une image matricielle comportant une pluralité de lignes de pixels et une pluralité de colonnes de pixels, chaque image partielle élémentaire étant une image ligne correspondant à une ou plusieurs lignes de pixels adjacentes d'une même image matricielle.

Ainsi, la solution proposée, qui repose sur la fusion de plusieurs images à bord du satellite, est applicable à différentes configurations pour l'instrument d'observation et à différents modes d'acquisition. Dans le cas d'un mode d'acquisition de type « pushbroom », les lignes de pixels acquises successivement peuvent être traitées à la volée, avant d'avoir acquis des images partielles élémentaires pour toutes les zones partielles, au fur et à mesure que des lignes de pixels sont reçues des différents capteurs linéaires. Dans le cas d'un mode d'acquisition utilisant un capteur matriciel, les images partielles élémentaires correspondent à des sous-images extraites successivement à partir des images acquises par le capteur matriciel.

## Présentation des figures

L'invention sera mieux comprise à la lecture de la description suivante, donnée à titre d'exemple nullement limitatif, et faite en se référant aux figures qui représentent :

- Figure 1 : une représentation schématique d'un satellite en orbite autour de la Terre,
- Figure 2 : des représentations schématiques d'exemples de capteurs d'un instrument d'observation du satellite,
- Figure 3 : un diagramme illustrant les principales étapes d'un exemple de mise en œuvre d'un procédé d'acquisition,
- Figure 4 : un diagramme illustrant les principales étapes d'un exemple de mise en œuvre de l'estimation de décalages entre images partielles élémentaires.

Dans ces figures, des références identiques d'une figure à une autre désignent des éléments identiques ou analogues. Pour des raisons de clarté, les éléments représentés ne sont pas à l'échelle, sauf mention contraire.

En outre, l'ordre des étapes indiqué sur ces figures est donné uniquement à titre d'exemple non limitatif de la présente divulgation qui peut être appliquée avec les mêmes étapes exécutées dans un ordre différent.

## Description des modes de réalisation

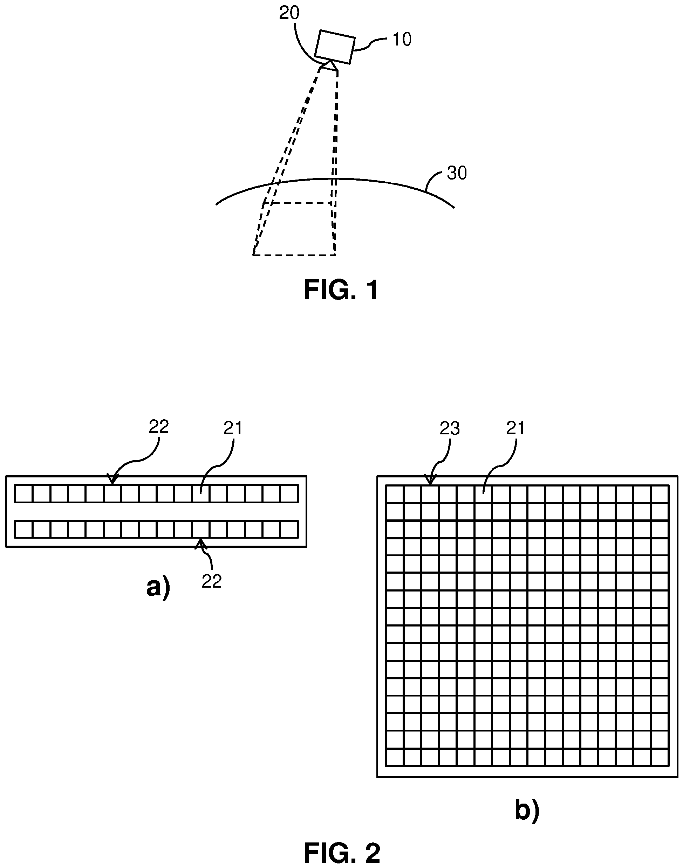

La figure 1 représente schématiquement un satellite 10 en orbite terrestre autour de la Terre 30. De manière générale, la présente divulgation est applicable à tout type d'orbite terrestre. La présente divulgation trouve une application particulièrement avantageuse dans le cas d'orbites défilantes (c'est-à-dire non-géostationnaires) circulaires. Toutefois, la présente divulgation est également applicable dans le cas d'un satellite 10 en orbite géostationnaire (GEO) ou sur une orbite inclinée ou elliptique. Dans des modes préférés de la présente divulgation, le satellite 10 est en orbite défilante basse (« Low-Earth Orbit » ou LEO) ou moyenne (« Medium Earth Orbit » ou MEO) altitude, de préférence circulaire. Dans la suite de la description, on se place de manière nullement limitative dans le cas d'un satellite 10 en orbite défilante.

Le satellite 10 embarque un instrument d'observation 20. L'instrument d'observation 20 est de préférence sensible dans des longueurs d'ondes visibles et/ou infrarouge. L'instrument d'observation 20 comporte, de manière connue en soi, des moyens d'acquisition configurés pour capter le flux optique provenant de la scène observée à la surface de la Terre 30. En particulier, l'instrument d'observation 20 comporte au moins un capteur comportant une pluralité de cellules d'acquisition 21 organisés en une ou plusieurs lignes et plusieurs colonnes, chaque cellule d'acquisition 21 permettant d'acquérir le flux optique provenant d'une portion de la scène observée.

Différents agencements sont possibles pour l'au moins un capteur de l'instrument d'observation 20. La figure 2

EP 4 392 739 B1

représente schématiquement des exemples non limitatifs d'agencements de capteurs.

La partie a) de la figure 2 représente schématiquement un premier exemple dans lequel l'instrument d'observation 20 comporte deux capteurs linéaires 22 indépendants. Dans le cas d'un satellite 10 en orbite défilante, chacun des deux capteurs linéaires 22 est par exemple agencé transversalement à une direction de défilement dudit satellite 10 et est adapté à produire au moins une ligne de pixels. Les cellules d'acquisition 21 de chaque capteur linéaire 22 sont donc organisées en une ou plusieurs lignes agencées transversalement à la direction de défilement du satellite 10. Dans des modes préférés de réalisation de l'instrument d'observation 20, chacun des deux capteurs linéaires 22 est un capteur TDI comportant par exemple plusieurs étages de lignes de cellules d'acquisition 21 qui effectuent un transfert de charges d'un ligne de cellules d'acquisition 21 à une autre de manière synchronisée avec le défilement du satellite 10. Par exemple, les capteurs linéaires 22 sont des capteurs panchromatiques ou infrarouges.

Chaque capteur linéaire 22 comporte un nombre de colonnes significativement plus important que le nombre de lignes. Par exemple, chaque capteur linéaire 22 comporte une ou quelques (typiquement de l'ordre de la dizaine ou moins) lignes de cellules d'acquisition 21 et plusieurs milliers de colonnes de cellules d'acquisition 21. Il est à noter que les capteurs linéaires 22 ont de préférence des caractéristiques identiques en termes de nombre de lignes / nombre de colonnes, en termes de résolution spatiale et en termes de bande(s) de longueurs d'ondes mesurée(s).

Il est à noter que, suivant d'autres exemples, l'instrument d'observation 20 peut comporter davantage que deux capteurs linéaires 22 pour la mise en œuvre de la présente divulgation. Il est également à noter que les moyens d'acquisition de l'instrument d'observation 20 peuvent également comporter d'autres capteurs en plus des deux capteurs linéaires 22, par exemple sensibles dans des bandes de longueurs d'ondes différentes. Par exemple, si les capteurs linéaires 22 sont des capteurs panchromatiques, les moyens d'acquisition peuvent également comporter des capteurs multispectraux.

La partie b) de la figure 2 représente un deuxième exemple dans lequel l'instrument d'observation 20 comporte un capteur matriciel 23. Dans un tel cas, le capteur matriciel 23 comporte une pluralité de cellules d'acquisition 21 agencées selon une pluralité de lignes et une pluralité de colonnes. Dans le cas d'un satellite 10 en orbite défilante, les lignes de cellules d'acquisition 21 s'étendent par exemple transversalement à la direction de défilement du satellite 10, et chaque cellule d'acquisition 21 est adaptée à produire un pixel de sorte que le capteur matriciel 23 produit une image matricielle comportant une pluralité de lignes de pixels et une pluralité de colonnes de pixels. Par exemple, le capteur matriciel 23 est un capteur panchromatique ou infrarouge. Le capteur matriciel 23 comporte par exemple plusieurs milliers de lignes de cellules d'acquisition 21 et plusieurs milliers de colonnes de cellules d'acquisition 21.

Il est à noter que, suivant d'autres exemples, l'instrument d'observation 20 peut comporter davantage qu'un seul capteur matriciel 23 pour la mise en œuvre de la présente divulgation. Dans un tel cas, les capteurs matriciels 23 utilisés dans la présente divulgation ont de préférence des caractéristiques identiques en termes de nombre de lignes / nombre de colonnes, en termes de résolution spatiale et en termes de bande(s) de longueurs d'ondes mesurée(s).

Il est également à noter que les moyens d'acquisition de l'instrument d'observation 20 peuvent également comporter d'autres capteurs en plus du capteur matriciel 23, par exemple sensibles dans des bandes de longueurs d'ondes différentes.

L'instrument d'observation 20 peut également comporter une optique comportant un ou plusieurs miroirs agencés pour réfléchir le flux optique provenant de la scène observée en direction du ou des capteurs. Le ou les capteurs sont par exemple agencés au niveau d'un plan focal de l'optique dudit instrument d'observation 20.

Le satellite 10 comporte en outre un circuit de traitement (non représenté sur les figures), qui est relié à l'instrument d'observation 20 et traite les images acquises par l'instrument d'observation 20. En particulier, le circuit de traitement met en œuvre un procédé 50 de génération d'image qui sera décrit ci-après.

Le circuit de traitement comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 50 de génération d'image. Alternativement ou en complément, le circuit de traitement comporte un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie desdites étapes du procédé 50 de génération d'image.

Il est à noter que le satellite 10 peut également comporter, de manière conventionnelle, d'autres éléments tels que des moyens de mesure d'attitude (senseur stellaire, gyromètre, etc.), ou encore des moyens de contrôle d'attitude (roues de réaction, volants d'inertie, actionneurs gyroscopiques, magné-coupleurs, etc.), notamment, qui peuvent être également reliés au circuit de traitement.

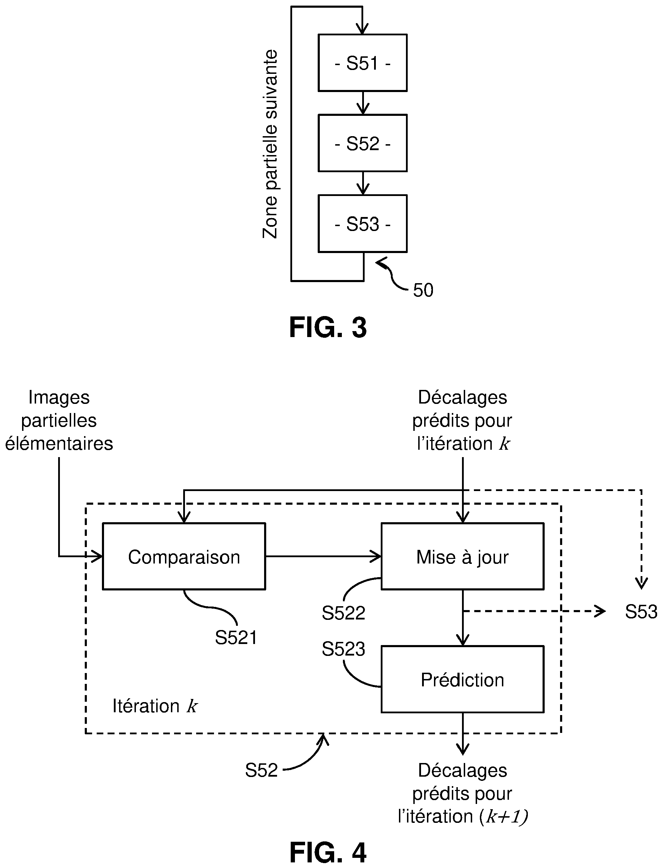

La figure 3 représente schématiquement les principales étapes d'un procédé 50 de génération d'une image représentant une zone géographique à la surface de la Terre 30.

Comme cela sera décrit de manière plus détaillée ci-après, l'image générée comporte une pluralité de lignes de pixels et une pluralité de colonnes de pixels, et correspond au regroupement d'une pluralité d'images partielles représentant des zones partielles différentes à l'intérieur de la zone géographique.

En outre, chaque image partielle est obtenue en fusionnant, à bord du satellite 10, au moins deux images partielles dites élémentaires représentant théoriquement la même zone partielle. Les images partielles élémentaires sont acquises par l'instrument d'observation 20 à des instants respectifs différents. Ainsi, chaque image partielle est obtenue en fusionnant plusieurs images partielles élémentaires représentant la même zone partielle.

La nature des images partielles élémentaires dépend par exemple du type de capteur(s) de l'instrument d'observation 20.

Par exemple, si l'instrument d'observation 20 comporte au moins deux capteurs linéaires 22, tel qu'illustré par la partie a) de la figure 2, alors chaque image partielle élémentaire correspond à une image ligne correspondant à une ou plusieurs lignes de pixels acquises successivement par l'un des au moins deux capteurs linéaires 22. Dans la présente divulgation, on entend par « image ligne » une image comportant un nombre de lignes significativement inférieur au nombre de colonnes, par exemple 100 fois moins de lignes que de colonnes, de préférence 1000 fois moins de lignes que de colonnes. Du fait de leur agencement particulier, les deux capteurs linéaires 22 de la partie a) de la figure 2 observent successivement la même zone partielle, par défilement du satellite 10, de sorte que les images partielles élémentaires représentant la même zone partielle sont obtenues à des instants respectifs différents.

Si l'instrument d'observation 20 comporte au moins un capteur matriciel 23, tel qu'illustré par la partie b) de la figure 2, alors chaque image partielle élémentaire est par exemple une image ligne correspondant à une ou plusieurs lignes de pixels adjacentes extraites d'une même image matricielle. En d'autres termes, une image matricielle élémentaire représente plusieurs zones partielles, et l'image partielle élémentaire correspond à une partie d'une image matricielle élémentaire acquise par le capteur matriciel 23. Les images partielles élémentaires sont donc extraites à partir d'images matricielles élémentaires respectives différentes acquises à des instants respectifs différents par l'instrument d'observation 20. Les images matricielles élémentaires représentant une même zone partielle peuvent être acquises à des instants respectifs différents par un même capteur matriciel 23, ou bien par des capteurs matriciels 23 différents si l'instrument d'observation 20 comporte au moins deux capteurs matriciels 23.

Selon le procédé 50 de génération, toutes les zones partielles d'une zone géographique sont traitées successivement.

Tel qu'illustré par la figure 3, le traitement d'une zone partielle comporte une étape S51 de réception, par le circuit de traitement, d'au moins deux images partielles élémentaires acquises par l'instrument d'observation 20 à des instants respectifs différents et représentant ladite zone partielle en cours de traitement. En considérant un satellite 10 en orbite défilante, lesdites images partielles élémentaires de ladite zone partielle en cours de traitement sont donc acquises depuis des positions initiales différentes dudit satellite 10 sur son orbite, au cours d'un même survol de ladite zone partielle (au cours de la même période orbitale).

Dans la suite de la description, on se place de manière nullement limitative dans le cas où l'on considère exactement deux images partielles élémentaires pour générer l'image partielle de la zone partielle en cours de traitement. Rien n'exclut cependant, suivant d'autres exemples, de considérer davantage d'images partielles élémentaires pour la génération de l'image partielle de la zone partielle en cours de traitement.

Tel qu'indiqué ci-dessus, les zones partielles sont traitées successivement. En pratique, la zone partielle en cours de traitement n'est pas nécessairement connue *a priori.* Il suffit en pratique de savoir que deux images partielles élémentaires représentent en principe sensiblement la même zone partielle. Le traitement successif de zones partielles s'effectue en traitant successivement des paires successives d'images partielles élémentaires, chaque paire d'images partielles élémentaires représentant sensiblement une même zone partielle sans avoir à connaître les coordonnées de la zone partielle en cours de traitement.

Par exemple, dans le cas où l'instrument d'observation 20 comporte deux capteurs linéaires 22, alors le traitement successif des zones partielles revient à traiter successivement des images lignes acquises successivement par chacun desdits capteurs linéaires 22, à mesure que chacun des capteurs linéaires balaie la zone géographique. Les images lignes représentant la même zone partielle (images partielles élémentaires) sont acquises à des instants respectifs différents puisque les capteurs linéaires 22 ne pointent pas simultanément vers la même zone partielle. De préférence, les images lignes sont traitées successivement à mesure qu'elles sont acquises par l'instrument d'observation et reçues par le circuit de traitement, de sorte les zones partielles traitées successivement sont des zones partielles adjacentes à la surface de la Terre 30.

Par exemple, dans le cas où l'instrument d'observation 20 comporte un capteur matriciel 23, alors le traitement successif des zones partielles revient à traiter successivement des images lignes différentes extraites à partir d'images matricielles différentes acquises successivement par le capteur matriciel 23. Pour chaque image matricielle, les images lignes extraites et traitées successivement sont de préférence des images lignes adjacentes, de sorte que les zones partielles traitées successivement sont des zones partielles adjacentes à la surface de la Terre 30.

Tel qu'illustré par la figure 3, le traitement d'une zone partielle comporte ensuite une étape S52 d'estimation, par le circuit de traitement, de décalages entre des pixels desdites deux images partielles élémentaires. En effet, du fait de différentes sources d'erreurs (méconnaissance de la ligne de visée de l'instrument d'observation 20 par exemple due à des vibrations, déformation géométrique d'une empreinte au sol d'un champ de vision de l'instrument d'observation 20 du fait que la zone partielle est observée depuis deux positions différentes du satellite 10 par rapport à ladite zone partielle, distorsion géométrique introduite par une optique de l'instrument d'observation 20, etc.), des pixels d'images partielles élémentaires différentes, qui devraient représenter une même portion de la zone partielle, peuvent en pratique représenter des portions respectives légèrement différentes de ladite zone partielle. L'écart entre ces portions respectives différentes se traduit par un décalage entre les pixels correspondants (en quantité pixels).

Etant donné que les deux images partielles élémentaires sont censées représenter la même zone partielle, les décalages entre pixels peuvent par exemple être estimés par comparaison du contenu desdites images partielles élémentaires. Les images partielles élémentaires étant de dimensions réduites (dans la mesure où elles ne représentent qu'une partie de la zone géographique à imager), elles peuvent être utilisées pour estimer les décalages entre leurs pixels avec une complexité de calcul limitée.

Les décalages sont estimés au moyen d'un filtre de Kalman. Le filtre de Kalman peut être tout type de filtre de Kalman connu de la personne du métier, y compris ses variantes non linéaires (filtre de Kalman étendu, filtre de Kalman sans parfum, etc.), et le choix d'un type particulier de filtre de Kalman correspond à un mode particulier de mise en œuvre du procédé 50 de génération. Quel que soit son type, un filtre de Kalman est un filtre itératif qui estime un vecteur d'état et qui, à chaque itération, réalise une phase de prédiction et une phase de mise à jour dudit vecteur d'état. La phase de prédiction fournit une vecteur d'état dit prédit et la phase de mise à jour fournit un vecteur d'état dit mis à jour. En pratique, le vecteur d'état prédit pour une itération est calculé à partir du vecteur d'état mis à jour pour l'itération précédente. Le vecteur d'état mis à jour est calculé en fonction du vecteur d'état prédit et en fonction de mesures représentatives dudit vecteur d'état.

Dans le cas présent, le vecteur d'état du filtre de Kalman comporte au moins les décalages entre pixels des images partielles élémentaires de la zone partielle en cours de traitement, et les mesures sont déterminées au moins à partir desdites images partielles élémentaires. Les itérations successives du filtre de Kalman correspondent ici à la succession de paires d'images partielles élémentaires traitées, c'est-à-dire à la succession de zones partielles traitées. Par conséquent, la zone partielle représentée par la paire d'images partielles élémentaires change d'une itération à une autre du filtre de Kalman. Dans la suite de la description, on parle donc indifféremment d'itération $k$ ou de traitement de la zone partielle de rang $k$.

La figure 4 représente schématiquement les principales étapes d'un mode préféré de mise en œuvre de l'étape S52 d'estimation des décalages entre les images partielles élémentaires au moyen d'un filtre de Kalman.

Tel qu'illustré par la figure 4, l'étape S52 d'estimation des décalages pour la zone partielle en cours de traitement, de rang $k$ (itération $k$ du filtre de Kalman), prend en entrée les décalages prédits pour ladite zone partielle de rang $k$ à partir des décalages mis à jour pour la zone partielle de rang $(k-1)$, c'est à dire traitée précédemment à l'itération $(k-1)$ du filtre de Kalman. Tel qu'illustré par la figure 4, l'étape S52 d'estimation des décalages comporte une étape S521 de comparaison des images partielles élémentaires représentant la zone partielle de rang $k$, reçues par le circuit de traitement. L'étape S521 de comparaison fournit une innovation de rang $k$ permettant de mettre à jour les décalages prédits pour la zone partielle de rang $k$. L'étape S52 d'estimation des décalages comporte alors une étape S522 de mise à jour des décalages prédits pour la zone partielle de rang $k$ en fonction notamment de l'innovation de rang $k$. L'étape S522 de mise à jour fournit en sortie les décalages mis à jour pour la zone partielle de rang $k$. L'étape S52 d'estimation des décalages comporte alors une étape S523 de prédiction qui, à partir des décalages mis à jour pour la zone partielle de rang $k$, calcule les décalages prédits pour la zone partielle qui sera traitée ensuite, c'est-à-dire la zone partielle de rang $(k+1)$.

Tel qu'illustré par la figure 4, les décalages estimés pour la zone partielle en cours de traitement de rang $k$, utilisés au cours d'une étape S53 de fusion décrite ci-après, peuvent être indifféremment les décalages prédits pour ladite zone partielle de rang $k$ ou les décalages mis à jour pour ladite zone de traitement de rang $k$.

Dans des modes particuliers de mise en œuvre, l'étape S521 de comparaison comporte un recalage entre elles desdites au moins deux images partielles élémentaires en fonction des décalages prédits pour la zone partielle en cours de traitement, de rang $k$. Par « recalage », on entend que les décalages prédits pour la zone partielle de rang $k$ sont corrigés dans les images partielles élémentaires de sorte que les pixels des images partielles élémentaires recalées représentent théoriquement les mêmes portions de la zone partielle (aux erreurs d'estimation des décalages prédits près). Au cours de ce recalage, il est possible de corriger les deux images partielles élémentaires, ou bien de n'en corriger qu'une seule en considérant l'autre comme référence. Le recalage comporte par exemple un rééchantillonnage d'au moins une desdites images partielles élémentaires en fonction des décalages prédits. Par exemple, le rééchantillonnage d'une image partielle élémentaire met en œuvre une interpolation bicubique de cette image partielle élémentaire. Toutefois, tout type de méthode de rééchantillonnage connu de la personne du métier peut être mis en œuvre et le choix d'un type particulier de méthode de rééchantillonnage ne correspond qu'à un exemple non limitatif de mise en œuvre.

Dans des modes particuliers de mise en œuvre, la mise à jour par le filtre de Kalman des décalages prédits pour la zone partielle de rang $k$ met en œuvre un algorithme de calcul de flot optique appliqué auxdites deux images partielles élémentaires recalées en fonction desdits décalages prédits pour la zone partielle de rang $k$. Toutefois, tout type de méthode de mise en correspondance d'images (ou « matching » dans la littérature anglo-saxonne) connu de la personne du métier peut être mis en œuvre et le choix d'un type particulier de méthode de mise en correspondance ne correspond qu'à un exemple non limitatif de mise en œuvre. Notamment, il est possible, suivant d'autres exemples de mise en œuvre, de mettre en correspondance les images partielles élémentaires par un calcul de ressemblance, tel qu'un calcul de corrélation, entre lesdites images partielles élémentaires.

Tel qu'illustré par la figure 3, le traitement d'une zone partielle comporte ensuite l'étape S53 de fusion, par le circuit de traitement, desdites deux images partielles élémentaires représentant la zone partielle en cours de traitement en fonction des décalages estimés au cours de l'étape S52 d'estimation.

Par exemple, les décalages estimés sont utilisés pour recaler les images partielles élémentaires entre elles, puis les images partielles élémentaires recalées peuvent être combinées, par exemple en calculant une somme (éventuellement pondérée) desdites images partielles élémentaires recalées ou en calculant la différence entre lesdites images partielles élémentaires recalées. Il est à noter qu'il est également possible de générer plusieurs images partielles lors de l'étape S53 de fusion (pour générer plusieurs images de la zone géographique), en générant par exemple une première image partielle représentative de la somme desdites images partielles élémentaires recalées et une seconde image partielle représentative de la différence entre lesdites images partielles élémentaires recalées.

Tel qu'indiqué ci-dessus en référence à la figure 4, les décalages estimés pour la zone partielle en cours de traitement, de rang $k$, utilisés au cours de l'étape S53 de fusion, peuvent être indifféremment les décalages prédits pour la zone partielle de rang $k$ ou les décalages mis à jour pour ladite zone de traitement de rang $k$.

En principe, les décalages mis à jour pour la zone partielle de rang $k$ tiennent compte des images partielles élémentaires représentant ladite zone partielle de rang $k$, de sorte que les décalages mis à jour sont en principe plus précis que les décalages prédits pour la zone partielle de rang $k$.

Toutefois, et tel qu'indiqué précédemment, l'étape S52 d'estimation comporte déjà dans certains modes de mise en œuvre une recalage desdites images partielles élémentaires représentant la zone partielle de rang $k$ en fonction des décalages prédits pour ladite zone partielle de rang $k$. Si, au cours de l'étape S53 de fusion, les images partielles élémentaires sont recalées en fonction des décalages mis à jour pour ladite zone partielle de rang k, cela implique que les images partielles élémentaires représentant la zone partielle de rang $k$ sont recalées deux fois au cours du traitement de ladite zone partielle de rang $k$, ce qui augmente les besoins en termes de capacité de calcul et de mémoire pour chaque itération du filtre de Kalman. Par conséquent, au cours de l'étape S53 de fusion, il est avantageux d'utiliser les décalages prédits pour la zone partielle en cours de traitement si l'on souhaite réduire les besoins en termes de capacité de calcul et de mémoire. Si l'on souhaite privilégier la précision des décalages estimées, il avantageux d'utiliser les décalages mis à jour pour la zone partielle en cours de traitement.

La fusion desdites deux images partielles élémentaires, au cours de l'étape S53, fournit l'image partielle de la zone partielle en cours de traitement, qui forme une partie de l'image à générer de la zone géographique. En répétant les différentes étapes illustrées par la figure 3 pour toutes les zones partielles, on obtient donc une pluralité d'images partielles représentant des zones partielles différentes, qui peuvent être regroupées de manière conventionnelle pour former une image de la zone géographique. Typiquement, les images partielles peuvent être simplement juxtaposées pour former l'image de la zone géographique. L'image ainsi générée de la zone géographique est ensuite transmise au sol, éventuellement après application, à bord du satellite 10, d'autres traitements optionnels sur ladite image générée qui sortent du cadre de la présente divulgation.

On décrit à présent une exemple détaillé de mise en œuvre du procédé 50 de génération d'image, dans le cas d'un instrument d'observation comportant deux capteurs linéaires 22 (partie a) de la figure 2). Cet exemple non limitatif s'appuie sur un filtre de Kalman simplifié, optimisé pour réduire les besoins en termes de capacité de calcul et de mémoire pour faciliter sa mise en œuvre à bord d'un satellite 10.

Afin de décrire cet exemple détaillé, on rappelle ci-après les mises en œuvre dans un filtre de Kalman selon les notations usuelles, auxquelles il sera ensuite fait référence par analogie pour décrire l'implémentation détaillée.

De manière générale, dans un filtre de Kalman, les équations régissant la phase de prédiction sont les suivantes :

$$\hat{\mathbf{x}}_{k|k-1} = \mathbf{F}_k \hat{\mathbf{x}}_{k-1|k-1} + \mathbf{B}_k \mathbf{u}_k + \mathbf{w}_k$$

$$\mathbf{P}_{k|k-1} = \mathbf{F}_k \mathbf{P}_{k-1|k-1} \mathbf{F}_k^T + \mathbf{Q}_k$$

expressions dans lesquelles :

- $\hat{\mathbf{x}}_{k|k-1}$ correspond au vecteur d'état prédit pour l'itération $k$,
- $\mathbf{P}_{k|k-1}$ correspond à une matrice de covariance de l'erreur prédite pour l'itération $k$,
- $\mathbf{F}_k$ correspond à une matrice d'évolution qui relie le vecteur d'état mis à jour pour l'itération $(k - 1)$ ($\hat{\mathbf{x}}_{k-1|k-1}$) à $\hat{\mathbf{x}}_{k|k-1}$,
- $\mathbf{u}_k$ correspond à une entrée de commande,
- $\mathbf{B}_k$ correspond à une matrice qui relie l'entrée de commande au vecteur d'état pour l'itération $k$,

- $\mathbf{Q}_k$ correspond à une matrice de covariance du bruit de processus $\mathbf{w}_k$.

Les équations régissant la phase de mise à jour sont les suivantes :

$$\tilde{\mathbf{y}}_k = \mathbf{z}_k - \mathbf{H}_k \hat{\mathbf{x}}_{k|k-1}$$

$$\mathbf{S}_k = \mathbf{H}_k \mathbf{P}_{k|k-1} \mathbf{H}_k^T + \mathbf{R}_k$$

$$\mathbf{K}_k = \mathbf{P}_{k|k-1} \mathbf{H}_k^T \mathbf{S}_k^{-1}$$

$$\hat{\mathbf{x}}_{k|k} = \hat{\mathbf{x}}_{k|k-1} + \mathbf{K}_k \tilde{\mathbf{y}}_k$$

$$\mathbf{P}_{k|k} = (\mathbf{I} - \mathbf{K}_k \mathbf{H}_k) \mathbf{P}_{k|k-1}$$

expressions dans lesquelles :

- $\tilde{\mathbf{y}}_k$ correspond à l'innovation calculée pour l'itération $k$,
- $\mathbf{z}_k$ correspond à une observation du processus à l'itération $k$,
- $\mathbf{H}_k$ correspond à une matrice qui relie le vecteur d'état $\hat{\mathbf{x}}_{k|k-1}$ à l'observation $\mathbf{z}_k$,
- $\mathbf{K}_k$ correspond à une matrice de gains de Kalman pour l'itération $k$,
- $\hat{\mathbf{x}}_{k|k}$ correspond au vecteur d'état mis à jour pour l'itération $k$,
- $\mathbf{P}_{k|k}$ correspond à la matrice de covariance de l'erreur mise à jour pour l'itération $k$,
- $\mathbf{R}_k$ correspond à une matrice de covariance d'un bruit de mesure,
- $\mathbf{I}$ correspond à la matrice identité.

Dans l'exemple non limitatif considéré ici, le filtre de Kalman est simplifié en considérant qu'il n'y a pas de bruit de processus, que ledit filtre de Kalman est dépourvu d'entrée de commande et que la matrice de gain de Kalman est constante d'une itération à une autre. En d'autres termes, les principales équations régissant ce filtre de Kalman simplifié sont les suivantes :

$$\tilde{\mathbf{y}}_k = \mathbf{z}_k - \mathbf{H}_k \hat{\mathbf{x}}_{k|k-1}$$

$$\hat{\mathbf{x}}_{k|k} = \hat{\mathbf{x}}_{k|k-1} + \mathbf{K}\, \tilde{\mathbf{y}}_k$$

$$\hat{\mathbf{x}}_{k|k-1} = \mathbf{F}_k \hat{\mathbf{x}}_{k-1|k-1}$$

On décrit à présent l'exemple de mise en œuvre du filtre de Kalman simplifié en adoptant d'autres notations.
Dans le présent exemple, les images partielles élémentaires correspondent à des images lignes élémentaires, chaque image ligne élémentaire comportent un nombre de lignes égal à $N_L$ et un nombre de colonnes égal à $N_C$, $N_L$ étant très inférieur à $N_C$ (facteur au moins 100 voire au moins 1000). Par exemple, $2 \le N_L \le 10$ et $N_C > 1000$ voire $N_C > 5000$.
Afin de réduire la quantité de calculs à effectuer, les décalages sont estimés dans cet exemple pour des groupes (également connu sous le nom de « patches ») de pixels adjacents comportant $I$ lignes et $J$ colonnes. Ainsi, un décalage est estimé pour un groupe de $I \times J$ pixels adjacents. De préférence, $I = N_L$ de sorte que chaque groupe s'étend sur toutes les lignes de l'image partielle élémentaire et de sorte que chaque image partielle élémentaire est constituée de $n_C$ groupes de pixels adjacents avec $n_C = N_C/J$. Par exemple, $I \times J = 4 \times 4$ ou $I \times J = 2 \times 8$.
En considérant $I = N_L$, les décalages à estimer peuvent avantageusement consister en un vecteur de décalages entre lignes, désigné ci-après *gridL,* et un vecteur de décalages entre colonnes, désigné ci-après *gridC*. Ainsi, chaque décalage dans le vecteur *gridL* correspond au décalage entre les lignes de groupes de pixels correspondants (représentant théoriquement la même portion de la scène observée) dans les deux images partielles élémentaires. Chaque décalage dans le vecteur *gridC* correspond au décalage entre les colonnes de groupes de pixels correspondants (représentant théoriquement la même portion de la scène observée) dans les deux images partielles élémentaires. Les deux vecteurs *gridL* et *gridC* à estimer ont les mêmes dimensions, à savoir $1 \times n_C$. Le vecteur *gridL* (resp. *gridC*) prédit pour l'itération $k$ est désigné par $gridL_{k|k-1}$ (resp. $gridC_{k|k-1}$) et le vecteur $gridL$ (resp. $gridC$) mis à jour pour l'itération $k$ est désigné par $gridL_{k|k}$ (resp. $gridC_{k|k}$).

Dans le présent exemple, deux images partielles élémentaires sont utilisées pour former l'image partielle, désignées respectivement par $im1_k$ et $im2_k$ pour l'itération $k$. Dans cet exemple, lors du recalage, seule l'image partielle élémentaire $im2_k$ est rééchantillonnée en fonction des décalages estimés, et l'image partielle élémentaire rééchantillonnée est désignée par $im2res_k$. En relation avec les groupes de pixels définis ci-avant, on définit une fonction de regroupement (ou « binning » dans la littérature anglo-saxonne) comme suit :

$$([x])_{m,n} = \frac{1}{I \cdot J} \sum_{i=1}^{I} \sum_{j=1}^{J} (x)_{mI+i, nJ+j}$$

expression dans laquelle $x$ correspond à une image à laquelle est appliquée la fonction de regroupement $\llcorner \lrcorner$, et $(x)_{p,r}$ correspond à la valeur du pixel de l'image $x$ situé à la ligne $p$ et à la colonne r de ladite image $x$.

On décrit ci-après les équations utilisées pour calculer l'innovation pour l'itération $k$, désignée par $dL_k$ pour le vecteur $gridL$ et par $dC_k$ pour le vecteur $gridC$ (étape $\tilde{\mathbf{y}}_k = \mathbf{z}_k - \mathbf{H}_k \hat{\mathbf{x}}_{k|k-1}$ selon les notations usuelles du filtre de Kalman). Dans cet exemple, le calcul des innovations $dL_k$ et $dC_k$ pour la mise en jour des décalages met en œuvre un algorithme de calcul de flot optique.

Tout d'abord, les images partielles élémentaires $im1_k$ et $im2_k$ de l'itération k sont recalées entre elles, en rééchantillonnant l'image partielle élémentaire $im2_k$ en fonction des décalages prédits pour l'itération $k$, à savoir les vecteurs $gridL_{k|k-1}$ et $gridC_{k|k-1}$. En considérant de manière non-limitative un rééchantillonnage basé sur une interpolation bicubique :

$$im2res_k = bicubic\_interp\big(im2_k, gridL_{k|k-1}, gridC_{k|k-1}\big)$$

expression dans laquelle $bicubic\_interp$ correspond à la fonction d'interpolation bicubique. Par exemple, la fonction $bicubic\_interp$ peut être mise en œuvre au moyen de banques de filtres prédéterminés, à savoir une banque de filtres $p_L$ et une banque de filtres $p_C$ dans lesquelles les filtres sont indexés par les décalages entre respectivement les lignes et les colonnes :

$$im2res_k = im2_k * p_L\big[gridL_{k|k-1}\big] * p_C\big[gridC_{k|k-1}\big]$$

expression dans laquelle * correspond à la convolution.

Dans le cadre de l'algorithme de calcul de flot optique, on calcule également la somme entre les images partielles élémentaires recalées (c'est-à-dire entre $im1_k$ et $im2res_k$) et la différence entre lesdites images partielles élémentaires recalées :

$$imSUM_k = im1_k + im2res_k$$

$$imDIFF_k = im1_k - im2res_k$$

Ensuite, dans le cadre de l'algorithme de calcul de flot optique, on calcule les gradients de l'image partielle élémentaire $im1_k$. Les gradients entre lignes, désignés par $gL_k$, et les gradients entre colonnes, désignés par $gC_k$, sont par exemple calculés comme suit :

$$gL_k = im1_k * \begin{bmatrix} -1 \\ 0 \\ 1 \end{bmatrix}$$

$$gC_k = im1_k * \begin{bmatrix} -1 & 0 & 1 \end{bmatrix}$$

On définit également les fonctions carré et produit pour des images comme suit :

$$(x^2)_{p,r} = \left((x)_{p,r}\right)^2$$

$$(x \cdot y)_{p,r} = (x)_{p,r} \cdot (y)_{p,r}$$

En d'autres termes, il s'agit d'opérations carré et produit pixel à pixel.

Les décalages résiduels entre les images $im1_k$ et $im2res_k$ c'est-à-dire les innovations $dL_k$ et $dC_k$, sont par exemple calculés comme suit :

$$a = \lfloor gL_k^2 \rfloor + \lambda$$

$$b = \lfloor gL_k \cdot gC_k \rfloor$$

$$c = \lfloor gC_k^2 \rfloor + \lambda$$

$$u = \lfloor gL_k \cdot imDIFF_k \rfloor$$

$$v = \lfloor gC_k \cdot imDIFF_k \rfloor$$

$$d = a \cdot c - b^2$$

$$dL_k = \frac{1}{d}(c \cdot u - b \cdot v)$$

$$dC_k = \frac{1}{d}(a \cdot v - b \cdot u)$$

expressions dans lesquelles $\lambda$ correspond à un terme de régularisation de Tikhonov pour tenir compte de la présence de bruit d'estimation dans l'algorithme de calcul de flot optique. Le terme de régularisation $\lambda$ règle le niveau de prise en compte du bruit présent dans l'image partielle élémentaire $im1_k$, qui impacte l'estimation des gradients dans l'algorithme de calcul de flot optique. L'ordre de grandeur du terme de régularisation $\lambda$ est de préférence celui de la variance du bruit dans l'image partielle élémentaire $im1_k$. Par exemple, le terme de régularisation $\lambda$ est une matrice dans laquelle tous les coefficients sont égaux. Le terme de régularisation $\lambda$ peut par exemple être prédéterminé, et maintenu constant et identique pour toutes les zones partielles à traiter. Rien n'exclut cependant, suivant d'autres exemples, de faire varier le terme de régularisation $\lambda$ au cours des itérations, par exemple en fonction d'une estimation du bruit dans chaque image partielle élémentaire $im1_k$.

Ensuite, les décalages pour l'itération $k$ peuvent être mis à jour comme suit (étape $\hat{\mathbf{x}}_{k|k} = \hat{\mathbf{x}}_{k|k-1} + \mathbf{K}\mathbf{y}_k$ selon les notations usuelles du filtre de Kalman) :

$$gridL_{k|k} = gridL_{k|k-1} + K \cdot dL_k$$

$$gridC_{k|k} = gridC_{k|k-1} + K \cdot dC_k$$

expressions dans lesquelles $K$ correspond à la matrice des gains de Kalman. Tel qu'indiqué précédemment, les gains de Kalman sont dans cet exemple constants au cours des itérations, c'est-à-dire identiques pour toutes les zones partielles à traiter. De préférence, tous les gains de Kalman dans la matrice $K$ sont égaux à une même valeur $K_0$ qui peut être prédéterminée. De manière générale, plus la valeur $K_0$ est faible et moins on fait confiance aux informations déduites à partir des images $im1_k$ et $im2res_k$.

Rien n'exclut cependant, suivant d'autres exemples, de faire varier les gains de Kalman au cours des itérations successives, par exemple en utilisant la matrice de covariance du bruit de mesure à chaque itération, ou encore en fonction d'un modèle numérique de surface, MNS, ou en fonction d'un indicateur de fiabilité des informations déduites des images $im1_k$ et $im2res_k$ etc. Par exemple, il est possible d'augmenter les gains de Kalman lorsque le MNS indique que la zone partielle présente un relief important, par rapport au cas où le MNS indique que la zone partielle présente un relief faible (par exemple sensiblement plat). Suivant un autre exemple, une indication de fiabilité peut être obtenue par un calcul de corrélation entre les images $im1_k$ et $im2res_k$ et la valeur du pic de corrélation peut être utilisée comme indicateur de fiabilité des informations déduites de ces images. Ainsi, il possible d'augmenter les gains de Kalman lorsque la valeur du pic de corrélation est importante, par rapport au cas où la valeur du pic de corrélation est faible. De manière générale, l'utilisation de gains de Kalman variables peut dans certains cas permettre d'améliorer les performances du filtre de Kalman par rapport à l'utilisation de gains de Kalman constants.

Ensuite, les décalages mis à jour pour l'itération k sont utilisés pour calculer les décalages prédits pour l'itération (k + 1) (étape $\hat{x}_{k|k-1} = F_k \hat{x}_{k-1|k-1}$ selon les notations usuelles du filtre de Kalman), par exemple comme suit :

$$gridL_{k+1|k} = gridL_{k|k} * kern$$

$$gridC_{k+1|k} = gridC_{k|k} * kern$$

expressions dans lesquelles *kern* correspond à un filtre de prédiction qui est dans cet exemple est un vecteur ligne prédéterminé appliqué à la fois pour calculer $gridL_{k+1|k}$ et $gridC_{k+1|k}$. De manière générale, le filtre de prédiction *kern* peut prendre toute forme adaptée. Par exemple, il peut s'agir d'un filtre de lissage tel qu'un filtre gaussien, un filtre triangulaire, etc. Dans certains cas, il est également possible, par exemple pour réduire davantage les calculs à effectuer, d'avoir un filtre de prédiction *kern* qui correspond à l'identité, auquel cas les décalages prédits pour l'itération (k + 1) sont égaux aux décalages mis à jour pour l'itération *k*. En outre, il est également possible d'avoir des filtres de prédiction différents pour calculer respectivement $gridL_{k+1|k}$ et $gridC_{k+1|k}$.

L'image partielle pour l'itération k est alors obtenue en fusionnant les images partielles élémentaires $im1_k$ et $im2_k$ en fonction des décalages estimés pour l'itération k. Tel qu'indiqué ci-dessus, il est avantageux d'utiliser pour la fusion les décalages prédits pour l'itération *k*, puisque le recalage (images $im1_k$ et $im2res_k$) a déjà été effectué pour calculer les décalages résiduels $dL_k$ et $dC_k$. En outre, si la fusion correspond à la différence entre les images partielles élémentaires recalées, alors il est possible de réutiliser en tant qu'image partielle (c'est-à-dire en tant que résultat de la fusion), l'image $imDIFF_k$ déjà calculée dans le cadre de l'algorithme de calcul de flot optique. De telles dispositions permettent donc de réduire les besoins en termes de capacité de calcul et de mémoire. De manière plus générale, l'image partielle peut correspondre à l'image $imSUM_k$ et/ou à l'image $imDIFF_k$. D'autres combinaisons des images partielles élémentaires recalées sont également possibles, par exemple en appliquant des coefficients de pondération respectifs différents aux différentes images partielles élémentaires recalées.

Dans l'exemple détaillé décrit ci-avant, on comprend qu'il est possible de traiter à la volée, et de manière systématique, les différentes images partielles élémentaires acquises successivement par les capteurs linéaires 22, ce qui permet de réduire les besoins en termes de mémoire. En effet, le traitement d'un zone partielle peut démarrer dès que celle-ci a fait l'objet d'une acquisition par le capteur linéaire 22 qui observe en dernier cette zone partielle (synchronisation des capteurs linéaires 22). Au cours de l'itération k, dès que l'image partielle (par exemple $imSUM_k$ et/ou $imDIFF_k$) a été calculée et mémorisée, les images partielles élémentaires $im1_k$ et $im2_k$ n'ont plus besoin d'être conservées en mémoire.

Dans des modes particuliers de mise en œuvre, pour réduire les besoins en termes de débit de transfert de données et de mémoire, il est également possible de réaliser une compression / décompression à la volée des images partielles élémentaires après leur acquisition par l'instrument d'observation 20 et avant leur traitement par le circuit de traitement.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, les exemples ci-avant ont été donnés en considérant principalement le cas de capteurs linéaires 22. Toutefois, et tel qu'indiqué précédemment, la présente divulgation est également applicable à d'autres types de capteurs, notamment des capteurs matriciels 23. Dans un tel cas, les images partielles élémentaires sont par exemple extraites à partir d'images matricielles élémentaires acquises à des instants différents, représentant la même zone géographique, ou bien des zones géographiques distinctes mais présentant une intersection non nulle dans laquelle plusieurs zones partielles peuvent être traitées selon le procédé 50 de génération.

En outre, les exemples ci-avant ont été donnés en considérant principalement un filtre de Kalman dépourvu d'entrée de commande. En effet, dans le cas notamment où les images partielles élémentaires sont acquises par des capteurs linéaires 22, les variations des décalages d'une paire d'images partielles élémentaires à la suivante sont en principe assez faibles. Toutefois, il est également possible, dans d'autres exemples, d'utiliser une entrée de commande pour prendre en compte des informations externes (exogènes aux images, dérivées de mesures effectuées par des moyens indépendants de l'instrument d'observation 20) dont dépendent les décalages à estimer. En particulier, si les variations des décalages d'une paire d'images partielles élémentaires ne peuvent pas être considérés comme faibles, alors l'entrée de commande peut être utilisée pour aider le filtre de Kalman. Les variations des décalages peuvent être plus importantes, notamment, lorsque l'écart temporel entre les instants d'acquisition respectifs des images partielles élémentaires est relativement important, par exemple de l'ordre de quelques dizaines ou quelques centaines de millisecondes. Cela peut être le cas, notamment, dans le cas où les images partielles élémentaires sont acquises par un même capteur matriciel 23. Dans un tel cas, certaines sources de décalages (par exemple les effets de projection) produisent des effets au moins en partie déterministes qui peuvent être estimés a priori et injectés dans le filtre de Kalman via l'entrée de commande. Il est également possible d'injecter dans le filtre de Kalman, via l'entrée de commande, des informations externes représentatives du bougé du satellite entre ces instants d'acquisition, par exemple obtenues via des mesures effectuées par un ou plusieurs gyromètres du satellite, etc. De manière plus générale, toute information externe représentative des décalages à estimer peut être injectée dans le filtre de Kalman via l'entrée de commande.

En outre, les exemples ci-avant ont été donnés en considérant principalement le cas d'une fusion de deux images partielles élémentaires pour chaque zone partielle. Rien n'exclut cependant, suivant d'autres exemples, de considérer un nombre plus important d'images partielles élémentaires à fusionner. Par exemple, tout ce qui a été décrit ci-avant est applicable en considérant une image partielle élémentaire comme référence, et en traitant à chaque itération toutes les paires différentes d'images partielles élémentaires qui comprennent ladite image partielle élémentaire de référence.

La description ci-avant illustre clairement que, par ses différentes caractéristiques, la présente divulgation atteint les objectifs fixés. Il est d'ailleurs à noter que l'exemple détaillé décrit ci-avant a été implémenté, et ses performances confirmées, sur un FPGA qualifié pour le vol spatial.

La présente divulgation présente de nombreux avantages. En particulier, la fusion à bord des images acquises par l'instrument d'observation 20 permet d'améliorer la résolution spatiale des images transmises au sol.

En outre, grâce à la fusion à bord du satellite 10 des images acquises par l'instrument d'observation 20, il est possible, pour une configuration de satellite 10 / instrument d'observation 20 donnée (c'est-à-dire à configuration constante), d'augmenter les performances en termes de facteur de mérite (FdM, correspondant au produit FTM x SNR). Alternativement, grâce à la fusion à bord des images, il est possible d'atteindre un facteur de mérite donné (c'est-à-dire à facteur de mérite constant) avec une configuration plus simple (et donc moins coûteuse) du satellite 10 / de l'instrument d'observation 20.

**Revendications**

1.  Procédé (50) de génération d'une image par un satellite (10) en orbite terrestre, ledit satellite embarquant un instrument d'observation (20) et un circuit de traitement, ladite image représentant une zone géographique et étant obtenue en regroupant des images partielles représentant des zones partielles différentes à l'intérieur de la zone géographique, dans lequel les zones partielles sont traitées successivement et ledit procédé comporte, pour le traitement de chaque zone partielle :

    - une réception (S51), par le circuit de traitement, d'au moins deux images partielles élémentaires acquises par l'instrument d'observation à des instants respectifs différents et représentant ladite zone partielle en cours de traitement,
    - une estimation (S52), par le circuit de traitement, de décalages entre des pixels desdites au moins deux images partielles élémentaires,
    - une fusion (S53), par le circuit de traitement, desdites au moins deux images partielles élémentaires en fonction des décalages estimés, de sorte à former l'image partielle de ladite zone partielle en cours de traitement,

    et en ce que les décalages sont estimés au moyen d'un filtre de Kalman réalisant une phase de prédiction et une phase de mise à jour, dans lequel les décalages pour la zone partielle en cours de traitement sont estimés en fonction de décalages prédits pour ladite zone partielle en cours de traitement à partir des décalages mis à jour pour la zone partielle traitée à l'itération précédente du filtre de Kalman, lesdits décalages prédits pour ladite zone partielle en cours de traitement étant mis à jour par comparaison des au moins deux images partielles élémentaires représentant ladite zone partielle en cours de traitement.

2.  Procédé (50) de génération selon la revendication 1, dans lequel la comparaison desdites au moins deux images partielles élémentaires comporte un recalage entre elles desdites au moins deux images partielles élémentaires en fonction des décalages prédits pour la zone partielle en cours de traitement.

3.  Procédé (50) de génération selon l'une quelconque des revendications 1 à 2, dans lequel la mise à jour par le filtre de Kalman des décalages prédits met en œuvre des gains constants pour le traitement de toutes les zones partielles.

4.  Procédé (50) de génération selon l'une quelconque des revendications 1 à 3, dans lequel le filtre de Kalman est dépourvu d'entrée de commande.

5.  Procédé (50) de génération selon l'une quelconque des revendications 1 à 3, dans lequel le filtre de Kalman comporte une entrée de commande pour la prise en compte d'informations externes dont dépendent les décalages à estimer.

6.  Procédé (50) de génération selon l'une quelconque des revendications 1 à 5, dans lequel la fusion des au moins deux images partielles élémentaires d'une zone partielle comporte un recalage entre elles desdites au moins deux images partielles élémentaires en fonction des décalages estimés, et une combinaison desdites au moins deux images partielles élémentaires recalées.

7.  Procédé (50) de génération selon la revendication 6, dans lequel le recalage desdites au moins deux images partielles élémentaires comporte un rééchantillonnage d'au moins une desdites images partielles élémentaires en fonction des décalages estimés.

8.  Procédé (50) selon l'une quelconque des revendications 6 à 7, dans lequel les décalages estimés utilisés pour recaler et combiner lesdites au moins deux images partielles élémentaires correspondent aux décalages prédits pour la zone partielle en cours de traitement.

9.  Procédé (50) de génération selon l'une quelconque des revendications 6 à 8, dans lequel la combinaison des au moins deux images partielles élémentaires recalées correspond à une somme pixel à pixel desdites au moins deux images partielles élémentaires recalées et/ou à une différence pixel à pixel entre lesdites au moins deux images partielles élémentaires recalées.

10. Procédé (50) de génération selon l'une quelconque des revendications 1 à 9, comportant une compression / décompression des images partielles élémentaires après leur acquisition par l'instrument d'observation et avant leur traitement par le circuit de traitement.

11. Produit programme d'ordinateur comportant des instructions qui, lorsqu'elles sont exécutées par un circuit de traitement d'un satellite comportant en outre un instrument d'observation, configurent ledit circuit de traitement pour mettre en œuvre un procédé (50) de génération d'image selon l'une quelconque des revendications 1 à 10.

12. Satellite (10) destiné à être placé en orbite terrestre, comportant un instrument d'observation et un circuit de traitement, ledit circuit de traitement étant configuré pour mettre en œuvre un procédé (50) de génération d'image selon l'une quelconque des revendications 1 à 10.

13. Satellite (10) selon la revendication 12, dans lequel l'instrument d'observation comporte au moins deux capteurs linéaires (22), chacun des au moins deux capteurs linéaires étant agencé transversalement à une direction de défilement dudit satellite et étant adapté à produire une ligne de pixels, chaque image partielle élémentaire étant une image ligne correspondant à une ou plusieurs lignes de pixels acquises successivement par l'un des au moins deux capteurs linéaires.

14. Satellite (10) selon la revendication 13, dans lequel chacun des au moins deux capteurs linéaires est un capteur à report temporel et intégration.

15. Satellite (10) selon la revendication 12, dans lequel l'instrument d'observation comporte au moins un capteur matriciel (23) comportant une pluralité de cellules d'acquisition agencées selon une pluralité de lignes et une pluralité de colonnes, lesdites lignes de cellules d'acquisition s'étendant transversalement à une direction de défilement dudit satellite, chaque cellule d'acquisition étant adaptée à produire un pixel de sorte que ledit au moins un capteur matriciel est adapté à produire une image matricielle comportant une pluralité de lignes de pixels et une pluralité de colonnes de pixels, chaque image partielle élémentaire étant une image ligne correspondant à une ou plusieurs lignes de pixels adjacentes d'une même image matricielle.

**Patentansprüche**

1. Verfahren (50) zur Erzeugung eines Bildes mittels eines Satelliten (10) in einer Erdumlaufbahn, wobei der Satellit ein Beobachtungsinstrument (20) und eine Verarbeitungsschaltung an Bord hat, wobei das Bild eine geographische Zone repräsentiert und durch Neugruppierung von Teilbildern, die unterschiedliche Teilzonen in der geographischen Zone repräsentieren, gewonnen wird, wobei die Teilzonen nacheinander verarbeitet werden und das Verfahren für die Verarbeitung jeder Teilzone aufweist:

   - einen von der Verarbeitungsschaltung durchgeführten Empfang (S51) von mindestens zwei elementaren Teilbildern, die von dem Beobachtungsinstrument zu jeweils unterschiedlichen Zeitpunkten aufgenommen werden und die in Verarbeitung befindliche Teilzone repräsentieren,
   - eine von der Verarbeitungsschaltung durchgeführte Schätzung (S52) von Versätzen zwischen Pixeln der mindestens zwei elementaren Teilbilder,
   - eine von der Verarbeitungsschaltung durchgeführte Fusion (S53) der mindestens zwei elementaren Teilbilder als Funktion der geschätzten Versätze, um so das Teilbild der in Verarbeitung befindlichen Teilzone zu erzeugen,

   und dadurch, dass die Versätze mithilfe eines Kalman-Filters geschätzt werden, das eine Voraussagephase und eine Aktualisierungsphase ausführt, wobei die Versätze für die in Verarbeitung befindliche Teilzone als Funktion von vorausgesagten Versätzen für die in Verarbeitung befindliche Teilzone ausgehend von aktualisierten Versätzen für die Teilzone geschätzt werden, die in der vorausgehenden Iteration des Kalman-Filters verarbeitet worden ist, wobei die vorausgesagten Versätze für die in Verarbeitung befindliche Teilzone durch Vergleichen von mindestens zwei elementaren Teilbildern, die die in Verarbeitung befindliche Teilzone repräsentieren, aktualisiert werden.

2. Verfahren (50) zur Erzeugung nach Anspruch 1, in welchem das Vergleichen der mindestens zwei elementaren Teilbilder eine Neuausrichtung der mindestens zwei elementaren Teilbilder zueinander als Funktion der vorausgesagten Versätze für die in Verarbeitung befindliche Teilzone aufweist.

3. Verfahren (50) zur Erzeugung nach einem der Ansprüche 1 bis 2, in welchem die Aktualisierung der vorausgesagten Versätze mittels des Kalman-Filters konstante Verstärkungsfaktoren für die Verarbeitung aller Teilzonen verwendet.

4. Verfahren (50) zur Erzeugung nach einem der Ansprüche 1 bis 3, in welchem das Kalman-Filter keinen Steuereingang aufweist.

5. Verfahren (50) zur Erzeugung nach einem der Ansprüche 1 bis 3, in welchem das Kalman-Filter einen Steuereingang aufweist, um externe Informationen, von denen die zu schätzenden Versätze abhängen, zu berücksichtigen.

6. Verfahren (50) zur Erzeugung nach einem der Ansprüche 1 bis 5, in welchem die Fusion der mindestens zwei elementaren Teilbilder einer Teilzone eine Neuausrichtung der mindestens zwei elementaren Teilbilder zueinander als Funktion der geschätzten Versätze und eine Kombination der mindestens zwei neuausgerichteten elementaren Teilbilder aufweist.

7. Verfahren (50) zur Erzeugung nach Anspruch 6, in welchem die Neuausrichtung der mindestens zwei elementaren Teilbilder zueinander eine Neuabtastung mindestens eines der elementaren Teilbilder als Funktion der geschätzten Versätze aufweist.

8. Verfahren (50) nach einem der Ansprüche 6 bis 7, in welchem die geschätzten Versätze, die zum Neuausrichten und Kombinieren der mindestens zwei elementaren Teilbilder verwendet werden, den Versätzen entsprechen, die für die in Verarbeitung befindliche Teilzone vorausgesagt sind.

9. Verfahren (50) zur Erzeugung nach einem der Ansprüche 6 bis 8, in welchem die Kombination der mindestens zwei neuausgerichteten elementaren Teilbilder einer pixelweisen Addition der mindestens zwei neuausgerichteten elementaren Teilbilder und/oder einer pixelweisen Subtraktion der mindestens zwei neuausgerichteten elementaren Teilbilder entspricht.

10. Verfahren (50) zur Erzeugung nach einem der Ansprüche 1 bis 9, aufweisend ein Komprimieren/Entkomprimieren der elementaren Teilbilder nach Aufnahme durch das Beobachtungsinstrument und vor ihrer Verarbeitung durch die Verarbeitungsschaltung.

11. Computerprogrammprodukt aufweisend Befehle, die, wenn sie von einer Verarbeitungsschaltung eines Satelliten, der außerdem ein Beobachtungsinstrument aufweist, ausgeführt werden, die Verarbeitungsschaltung konfigurieren, um ein Verfahren (50) zur Bilderzeugung nach einem der Ansprüche 1 bis 10 durchzuführen.

12. Satellit (10), der in eine Erdumlaufbahn gebracht werden soll, aufweisend ein Beobachtungsinstrument und eine Verarbeitungsschaltung, wobei die Verarbeitungsschaltung konfiguriert ist, um ein Verfahren (50) zur Bilderzeugung nach einem der Ansprüche 1 bis 10 durchzuführen.

13. Satellit (10) nach Anspruch 12, in welchem das Beobachtungsinstrument mindestens zwei lineare Sensoren (22) aufweist, wobei jeder der mindestens zwei linearen Sensoren transversal zu einer Umlaufrichtung des Satelliten angeordnet ist und eingerichtet ist, eine Pixelzeile zu erzeugen, wobei jedes elementare Teilbild ein Zeilenbild ist, das einer oder mehreren von einem der mindestens zwei linearen Sensoren nacheinander aufgenommenen Pixelzeilen entspricht.

14. Satellit (10) nach Anspruch 13, in welchem jeder der mindestens zwei linearen Sensoren ein Zeitverschiebungs- und Zeitintegrationssensor ist.

15. Satellit (10) nach Anspruch 12, in welchem das Beobachtungsinstrument mindestens einen Matrixsensor (23) mit mehreren Aufnahmezellen aufweist, die in mehreren Zeilen und mehreren Spalten angeordnet sind, wobei die Zeilen der Aufnahmezellen sich transversal zu einer Umlaufrichtung des Satelliten erstrecken, wobei jede Aufnahmezelle geeignet ist, um ein Pixel hervorzubringen, so dass der mindestens eine Matrixsensor geeignet ist, um ein Matrixbild, das mehrere Pixelzeilen und mehrere Pixelspalten aufweist, zu erzeugen, wobei jedes elementare Teilbild ein Zeilenbild ist, das einer oder mehreren benachbarten Pixelzeilen desselben Matrixbildes entspricht.

## Claims

1. Method (50) for generating an image using a satellite (10) in earth orbit, said satellite carrying on board an observation instrument (20) and a processing circuit, said image representing a geographical area and being obtained by grouping partial images representing different partial areas within the geographical area, wherein the partial areas are processed successively and said method comprises, for the processing of each partial area:

   - receiving (S51), by the processing circuit, at least two basic partial images captured by the observation instrument at different respective times and representing said partial area being processed,
   - estimating (S52), by the processing circuit, shifts between pixels of said at least two basic partial images,
   - fusing (S53), by the processing circuit, said at least two basic partial images based on the estimated shifts, so as to form the partial image of said partial area being processed,

   and in that the shifts are estimated by means of a Kalman filter performing a prediction phase and an update phase, wherein the shifts for the partial area being processed are estimated based on shifts predicted for said partial area being processed from shifts updated for the partial area being processed at the previous iteration of the Kalman filter, said shifts predicted for said partial area being processed being updated by comparing the at least two basic partial images representing said partial area being processed.

2. Generation method (50) according to claim 1, wherein the comparison of said at least two basic partial images comprises adjusting between them said at least two basic partial images based on the shifts predicted for the partial area being processed.

3. Generation method (50) according to any one of claims 1 to 2, wherein the update by the Kalman filter of the predicted shifts implements constant gains for the processing of all of the partial areas.

4. Generation method (50) according to any one of claims 1 to 3, wherein the Kalman filter is devoid of a control input.

5. Generation method (50) according to any one of claims 1 to 3, wherein the Kalman filter comprises a control input for taking into account external information on which the shifts to be estimated depend.

6. Generation method (50) according to any one of claims 1 to 5, wherein the fusion of the at least two basic partial images of a partial area comprises adjusting between them said at least two basic partial images based on the estimated shifts, and combining said at least two adjusted basic partial images.

7. Generation method (50) according to claim 6, wherein the adjusting of said at least two basic partial images comprises resampling at least one of said basic partial images based on the estimated shifts.

8. Method (50) according to any one of claims 6 to 7, wherein the estimated shifts used to adjust and combine said at least two basic partial images correspond to the shifts predicted for the partial area being processed.

9. Generation method (50) according to any one of claims 6 to 8, wherein the combination of the at least two adjusted basic partial images corresponds to a pixelby-pixel sum of said at least two adjusted basic partial images and/or to a pixel-by-pixel difference between said at least two adjusted basic partial images.

10. Generation method (50) according to any one of claims 1 to 9, comprising compressing/decompressing the basic partial images after the capture thereof by the observation instrument and before the processing thereof by the processing circuit.

11. Computer program product comprising instructions which, when they are executed by a processing circuit of a satellite further comprising an observation instrument, configure said processing circuit to implement an image generation method (50) according to any one of claims 1 to 10.

12. Satellite (10) intended to be placed in earth orbit, comprising an observation instrument and a processing circuit, said processing circuit being configured to implement an image generation method (50) according to any one of claims 1 to 10.

13. Satellite (10) according to claim 12, wherein the observation instrument comprises at least two linear sensors (22), each of the at least two linear sensors being arranged transversely to a direction of travel of said satellite and being adapted to produce a row of pixels, each basic partial image being a line image corresponding to one or more pixel rows captured successively by one of the at least two linear sensors.

14. Satellite (10) according to claim 13, wherein each of the at least two linear sensors is a time-delay and integration sensor.

15. Satellite (10) according to claim 12, wherein the observation instrument comprises at least one matrix sensor (23) comprising a plurality of capture cells arranged according to a plurality of rows and a plurality of columns, said capture cell rows extending transversely to a direction of travel of said satellite, each capture cell being adapted to produce a pixel so that said at least one matrix sensor is adapted to produce a matrix image comprising a plurality of pixel rows and a plurality of pixel columns, each basic partial image being a line image corresponding to one or more adjacent pixel rows of the same matrix image.

FIG. 1

a)

b)

FIG. 2

Zone partielle suivante

- S51 -

- S52 -

- S53 -

50

## FIG. 3

Images
partielles
élémentaires

Décalages
prédits pour
l'itération $k$

Comparaison

Mise à jour

S521

S522

S523

Prédiction

Itération $k$

S52

S53

Décalages
prédits pour
l'itération $(k+1)$

## FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3217649 A
- FR 2976754
- US 8487996 B
- FR 3107953